# FASCICULE DE BREVET EUROPEEN

(11) **EP 1 170 533 B1**
(45) Date de publication et mention de la délivrance du brevet: **07.06.2006**
(21) Numéro de dépôt: 01401341.1
(22) Date de dépôt: 22.05.2001
(51) Int. Cl.: F16K 1/30, G05D 16/06

(54) **Robinet-détendeur de fluide à volant rotatif à course angulaire limitée**
Fluiddruckreduzierventil mit einem drehwinkelbegrenzten Drehknopf
Fluid pressure reducing valve with angularly limited rotating handwheel

(30) Priorité: 08.06.2000 FR 0007353
(43) Date de publication de la demande: 09.01.2002
(73) Titulaire: L'air Liquide, S.A. à Directoire et Conseil de Surveillance pour l'Etude et l'Exploitation des Procédés Georges Claude, 75321 Paris Cedex 07 (FR); FRO S.p.A., 37135 Verone (IT)
(72) Inventeur: Cannet, Gilles, 95620 Parmain (FR); Pisot, Philippe, 95590 Presles (FR); Arzenton, Marco, 37135 Verone (IT); Bendazzoli, Silvano, 37135 Verone (IT); Roy, Daniel, 77610 Marles en Brie (FR); Gounot, Etienne, 75006 Paris (FR)
(74) Mandataire: Pittis, Olivier

(56) Documents cités:
- EP-A- 0 747 796
- EP-A- 0 959 293
- FR-A- 2 447 573
- US-A- 3 699 998
- US-A- 3 776 412

## Description

L'invention concerne un bloc détendeur ou robinet-détendeur intégré à pression ou débit réglable, économique, robuste et d'usage et de maintenance aisés pour bouteilles de gaz, en particulier destiné aux bouteilles de gaz utilisables dans le domaine du soudage, dans les laboratoires ou analogues.

De nombreux types de détendeurs et robinets-détendeurs intégrés sont connus, voir par exemple le document EP-A-0 747 796. Les plus perfectionnés offrent les fonctions de réglage de la pression détendue, lecture de la haute pression et de la pression détendue par manomètres, anti-retour de gaz, retenue de pression, raccordement rapide etc. Les plus simples offrent une détente non réglable et pas de moyen de lecture de la pression détendue car celle-ci est fixe par définition.

D'autres dispositifs régulateurs et/ou détendeurs de gaz sont décrits par les documents FR-A-2447573, EP-A-0959293 et US-A-3,776,412.

Il est connu également que les détendeurs peuvent être utilisés comme générateurs de débit : en équipant leur circuit de sortie d'un orifice calibré, on obtient une relation déterminée entre la pression en aval de cet orifice, c'est-à-dire la pression détendue et le débit, sous réserve de respecter des limites de perte de charge dans le circuit d'utilisation du gaz. Il est connu par exemple que sous réserve d'établir un écoulement sonique dans l'orifice calibré, la relation qui lie la pression génératrice au débit est linéaire. On assure un écoulement sonique en respectant un rapport de 2 (1,8 pour l'air) entre la pression absolue à l'entrée de l'orifice et la pression absolue à sa sortie. Ainsi dans le texte suivant il est souvent fait mention du réglage de débit en variante du réglage de la pression par exemple.

Les appareils les plus perfectionnés, sont également les plus volumineux et les plus complexes à maintenir du fait du nombre de composants mis en oeuvre. Ils sont parfaitement adaptés aux grosses bouteilles, ils s'inscrivent bien dans l'enveloppe définie par le diamètre du fût des bouteilles, leur masse est négligeable par rapport à la masse des bouteilles qui les reçoivent et, par ailleurs, ces bouteilles voyagent moins fréquemment que les petites bouteilles, sont déplacées à l'aide de chariots et sont généralement utilisées par des opérateurs expérimentés.

Le problème s'est posé en particulier pour des bouteilles de petite capacité, c'est-à-dire ayant une contenance de 0,5 à 12 litres (volume géométrique), de donner tout le confort d'emploi à un détendeur ou à un ensemble robinet-détendeur intégré peu encombrant, robuste, économique, facile à maintenir et à utiliser en sachant que les petites bouteilles sont fréquemment transportées et, de ce fait, plus exposées aux chocs et vibrations et en sachant aussi que, de par leur petite taille, elles exposent d'avantage leur robinet aux salissures et projections associées à leur utilisation, par exemple particules de métal ou d'oxyde chaudes en soudage ou coupage par exemple.

Un des points les plus délicats des détendeurs et ensemble robinet-détendeur intégré est le manomètre mesurant la pression détendue car il doit être très sensible pour donner une information exploitable et très robuste pour ne pas être endommagé et donc faussé par les chocs et vibrations. Mais, pour être efficace un manomètre classique par exemple utilise un tube de bourdon facilement déformable donc sensible aussi aux chocs et une grande amplification du mouvement donc des déformations indésirables, deux caractéristiques qui contribuent à la fragilité.

Or, ce manomètre est dans les détendeurs et ensembles robinet-détendeur intégrés connus le seul moyen de connaître la pression effectivement délivrée.

Par ailleurs, ce manomètre occupe un espace non négligeable.

Il s'est donc posé le problème soit de renforcer le manomètre mais ceci entraîne un coût et d'en diminuer la taille mais cela en réduit la précision de lecture, soit de trouver un autre moyen de lecture.

Il est connu pour des détendeurs de graduer la course de la vis de réglage du détendeur à l'aide d'une sorte de vernier qui a le mérite d'être précis d'apparence mais mal commode d'usage avec des erreurs de lecture de type parallaxe et des temps de manoeuvre longs sur plusieurs tours de vis.

Les problèmes de maintenance qui se posent avec les détendeurs et ensembles robinet-détendeur intégré sont souvent concentrés sur les manomètres en particulier le manomètre mesurant la pression détendue car c'est le plus sensible et donc le plus fragile. Des solutions pour en faciliter le montage et l'échange, et pour en augmenter la robustesse ont été proposées par EP-A-0747796 mais leur coût d'achat demeure élevé et leur remplacement impose l'immobilisation de l'appareil.

Un autre composant source de complications de la maintenance est la vis de réglage.

Pour garantir son caractère imperdable et limiter sa course, afin de ne pas dépasser une pression limite, les vis connues sont solidaires du 'chapeau' de détente et leur remplacement, en cas d'usure ou de détérioration, implique le quasi-démontage complet du détendeur avec des risques de pollution ou d'erreur de remontage qu'il ne faut pas négliger et avec une procédure de réglage réclamant des moyens généralement réservés aux usines de montage de détendeurs ou ensembles robinet-détendeur intégré d'où une nécessité de retour de l'appareil au fabricant.

Une solution partielle mais qui n'est pas totalement satisfaisante est décrite par le document US-A-3,699,998 qui enseigne un régulateur de pression facilement démontable et calibré. Avec un tel dispositif, utiliser un manomètre ou autre indicateur de pression n'est plus nécessaire puisque le volant rotatif qui l'équipe comporte un indexage et à une course angulaire limitée à 360° de par la présence de picots de limitation de course.

Toutefois, avec ce dispositif à actionnement sur 1 tour, c'est-à-dire 360°, le problème qui se pose encore est qu'un opérateur peut avoir des difficultés à comprendre si le robinet est dans sa position de réglage maximum ou minimum puisque ces deux positions sont coïncidentes, ce qui engendre un problème de sécurité non négligeable.

De plus, il peut survenir une erreur de parallaxe lors de la lecture par l'opérateur des indications portées par le dispositif.

Par ailleurs, devoir actionner le volant sur un tour complet n'est pas pratique pour l'opérateur.

En outre, un volant de manipulation réalisé industriellement, donc avec des tolérances, puis monté sur un ensemble robinet-détendeur ne tombe jamais exactement dans la même position angulaire au montage, ce phénomène s'amplifiant à l'usage, avec l'usure et le matage des différentes pièces et, il peut en résulter qu'en bout de course, le repère de réglage minimal se retrouve malencontreusement en face de l'indicateur de réglage, alors que le volant est en réalité vissé dans sa position de réglage maximal.

Le but de la présente invention est alors de résoudre les problèmes ci-dessus en proposant un détendeur ou un ensemble robinet-détendeur intégré amélioré, c'est-à-dire qui permette une manipulation plus facile par l'opérateur tout en palliant les problèmes existants avec les dispositifs connus, en particulier le dispositif du document US-A-3,699,998.

La solution de l'invention consiste alors en un bloc détendeur ou un bloc ou ensemble robinet-détendeur intégré de fluide permettant de contrôler ou d'ajuster la pression ou le débit d'un fluide comprenant un corps principal au sein duquel est aménagé au moins un passage interne de fluide entre au moins un orifice d'entrée de fluide, par lequel entre un fluide à pression élevée, et au moins un orifice de sortie de fluide, par lequel sort le fluide à une pression basse inférieure à ladite pression haute ; des moyens de contrôle de la pression et/ou du débit du fluide étant agencée dans ou sur au moins une partie dudit passage interne de fluide de manière à permettre un contrôle du débit et/ou de la pression du fluide circulant dans ledit passage interne entre lesdits orifices d'entrée et de sortie ; et au moins un moyen à volant rotatif actionnable par un opérateur coopérant avec lesdits moyens de contrôle de la pression et/ou du débit du fluide, en réponse à un actionnement en rotation dudit moyen à volant rotatif, pour contrôler ou ajuster la pression et/ou le débit du fluide circulant dans ledit passage interne de fluide et sortant par ledit orifice de sortie de fluide, le moyen à volant rotatif étant mobile en rotation dans plusieurs positions angulaires distinctes, chaque position angulaire correspondant à une valeur donnée de pression ou de débit de fluide.

Selon l'invention, ledit moyen à volant rotatif a une course angulaire comprise entre 250° et 350°.

Selon le cas, le bloc ou ensemble de l'invention peut comprendre l'une ou plusieurs des caractéristiques suivantes :
- les moyens de contrôle de pression ou de débit de fluide comprennent une vis de détente ou une came agissant sur au moins un clapet, par l'intermédiaire d'un ressort.
- la vis de détente porte au moins un filetage.
- la vis de détente comporte un filetage à filets multiples.
- le diamètre du volant rotatif est d'au moins 50 mm.
- le moyen à volant rotatif comprend une ou plusieurs butées de limitation de course, de préférence les butées sont aménagées du côté interne du volant rotatif.
- le moyen à volant rotatif est réalisé en matériau polymère moulé.
- la course angulaire du volant rotatif est inférieure ou égale à 345°, de préférence inférieure ou égale à 340°.
- la course angulaire du volant rotatif est supérieure ou égale à 280°, de préférence supérieure ou égale à 300°.
- la course angulaire du volant rotatif est avantageusement comprise entre 305° et 335°, de préférence de l'ordre de 310° à 325°.
- les moyens de contrôle de pression ou de débit de fluide comprennent, en outre, au moins un clapet et/ou au moins un ressort.
- il comprend, en outre, un levier mobile et actionnable par l'opérateur, par exemple un levier rotatif, entre au moins une position d'ouverture du débit de fluide et au moins une position de fermeture du débit de fluide, ledit levier agissant sur un clapet permettant d'autoriser ou d'empêcher le passage du fluide dans au moins un passage du corps principal.

L'invention concerne aussi un récipient de fluide sous pression, en particulier une bouteille de gaz, équipée d'un bloc détendeur ou robinet-détendeur selon l'invention, de préférence ledit bloc est inséré dans et protégé par un capotage de protection monté sur le récipient.

Pratiquement, la solution de l'invention est de proposer un bloc détendeur ou robinet-détendeur dont le fonctionnement est expliqué ci-après en relation avec les figures annexées, parmi lesquelles :
- la figure 1 montre la course du volant d'un bloc selon l'invention,
- les figures 2a et 2b schématisent le fonctionnement d'un bloc selon l'invention, en particulier l'interaction du volant avec les pièces du corps situées sous le volant ;
- la figure 3 propose une variante des figures 1, 2a et 2b ;
- la figure 4 montre une vue en élévation d'un bloc robinet-détendeur selon l'invention ;
- la figure 5 montre le bloc de la figure 4 inséré dans un capotage de protection ;
- la figure 6 montre différentes vues du volant rotatif d'un bloc selon l'invention ;
- la figure 7 est une vue en coupe détaillée d'un bloc robinet-détendeur selon l'invention, et
- la figure 8 est une vue du levier 116 de la figure 7.

Selon l'invention, la pression ou le débit du fluide se règlent à l'aide d'un volant 110 gradué 111 qui fait correspondre à chaque position angulaire 111 une valeur de débit ou de pression. La course utile de ce volant 110 est nettement inférieure à un tour (360°), c'est-à-dire inférieure à 350°, pour éviter toute confusion possible à un ou plusieurs tours près.

Une vis 112 de détente située dans le corps 100 du bloc est définie en fonction de cette contrainte de limitation de la course à moins d'un tour et, par exemple, la vis est dotée d'un filetage à filets multiples. En variante, on peut remplacer la vis 112 de détente par une came.

Par ailleurs, le volant 110 est dimensionné de telle sorte que la vis 112 soit aisément manoeuvrable, c'est-à-dire elle a un diamètre suffisamment grand, supérieur à 50 mm par exemple, pour que le couple nécessaire au serrage du ressort 113 de détente puisse être transmis à la vis 112 sans pénibilité. Un grand volant 110 de détente offre une grande surface pour graver des repères 111 ou des chiffres bien lisibles. Préférablement, la surface recevant les gravures 111, repères ou chiffres est oblique par rapport à l'axe de rotation du, volant 110 car cette disposition particulière offre l'avantage de permettre la lecture des repères et chiffres 111 aussi bien sur le dessus que sur le coté du volant ce qui est important pour des petites bouteilles de gaz équipée de ce bloc.

Des butées 114 de limitation de course sont situées sur le volant 110 lui-même, ce qui permet d'offrir une bonne résistance aux efforts importants que le volant 110 reçoit, du fait de son grand diamètre lorsqu'il est manoeuvré. Préférablement, ces butées 114 sont situées à l'intérieur du volant 110, ce qui supprime le risque de pincer la main de l'opérateur entre butées 114 du volant et butées 115 du corps 100. Cette disposition particulière conduit également à une conception de moule plus simple si le volant 110 est élaboré par moulage. Enfin cette disposition apporte un bénéfice esthétique en ménageant une surface extérieure de volant 110 symétrique autour de son axe de rotation.

Des ressorts de détente 113 et de clapet calibrés sont utilisés pour avoir une loi constante de variation de la pression en fonction de la course du volant 110, d'un appareil à l'autre. Les tolérances dimensionnelles des autres composants en particulier les cotes entrant dans la chaîne de cotes alignée avec l'axe du clapet de détente ne sont pas critiques du point de vue de la précision du réglage car les jeux peuvent être rattrapés simplement au montage comme décrit ci-dessous.

Afin d'obtenir un résultat optimal, le montage et la calibration du robinet-détendeur intégré de l'invention peut se faire en procédant comme suit :
- l'ensemble robinet-détendeur intégré étant assemblé, il est ensuite alimenté en gaz par son circuit haute pression du corps 1 comprenant l'orifice d'entrée 130 de gaz ;
- ensuite on règle la vis de détente 112 pour obtenir une valeur de référence R de pression correspondant par exemple au milieu de la course du volant 110, à l'aide d'un manomètre dans des conditions normalisées de fonctionnement (pression amont, perte de charge aval et débit avec un gaz étalon) ;
- on rapporte et on solidarise avec la vis 112 de réglage le volant 110, gradué de réglage de telle sorte que la graduation correspondant à la valeur de référence R se trouve en face du repère de réglage.

Le remplacement du volant 110 de réglage à l'occasion de la maintenance d'un appareil conçu et réalisé selon la description ci-dessus, reprend les mêmes simples procédures que le montage.

La conception d'un robinet-détendeur intégré selon l'invention avec volant 110 gradué 111 procure l'avantage de pouvoir prérégler le débit ou la pression avant de faire circuler le gaz de la bouteille 300 vers son point utilisation. Les dispositifs classiques n'autorisent pas cette facilité et il en résulte une tendance des utilisateurs à ne pas dérégler leur détendeur en fin d'utilisation pour ne pas avoir à le régler à nouveau à l'utilisation suivante. Cette pratique est dommageable pour le détendeur car le ressort de détente et le clapet de détente restent sous contrainte en permanence et leurs caractéristiques peuvent dériver dans le temps. La faculté de prérégler le détendeur grâce à son volant gradué peut aussi faire adopter ce type de vis et de volant pour des appareils équipés d'un manomètre de pression détendue.

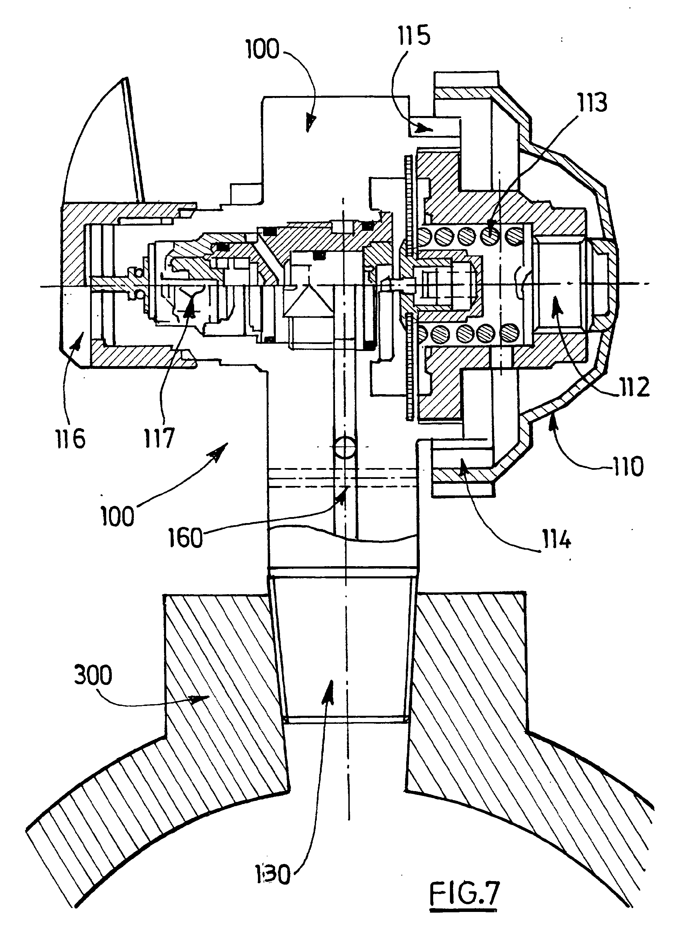

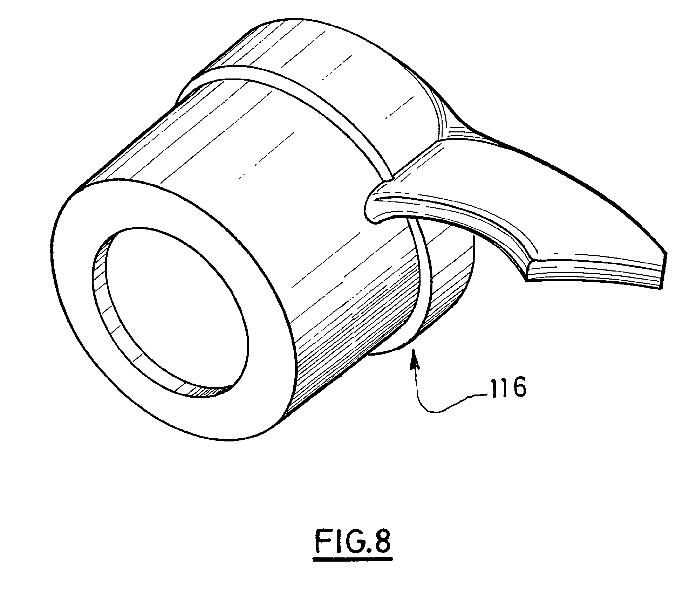

Un exemple de réalisation d'un robinet-détendeur intégré selon l'invention est illustré sur les figures 7 et 8. Ce robinet-détendeur intégré est composé d'un corps 100 recevant un moyen de marche/ arrêt actionné par un levier 116 (voir fig. 8) quart de tour qui permet d'ouvrir ou de fermer le débit et de voir si la bouteille 300 est ouverte ou fermée au premier coup d'oeil et dont la manoeuvre est simple et rapide tant à l'ouverture qu'à la fermeture. Ce système est constitué d'un clapet 117 dont la translation est commandée par la rotation du levier 116 solidaire, lui-même solidaire d'une rampe hélicoïdale se vissant ou se dévissant dans le corps 100 de l'ensemble robinet-détendeur intégré.

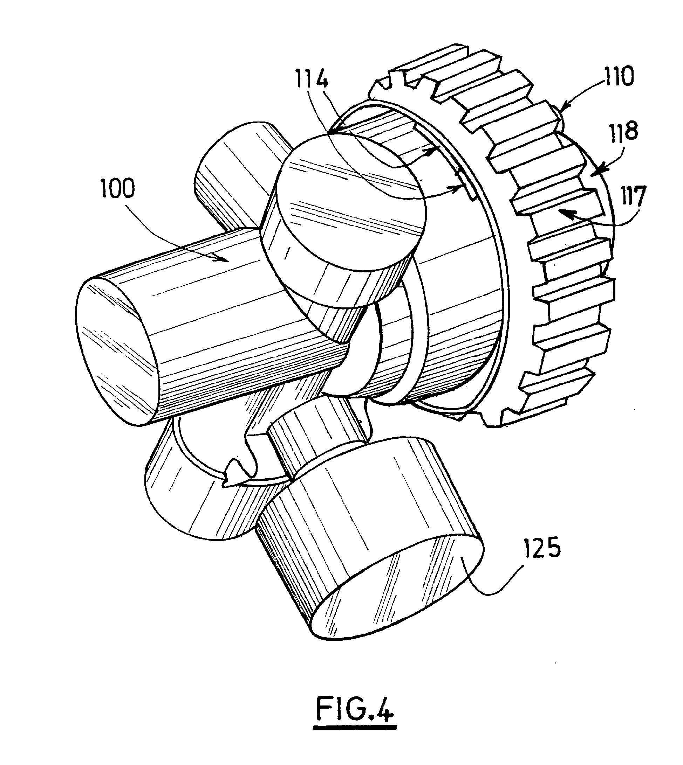

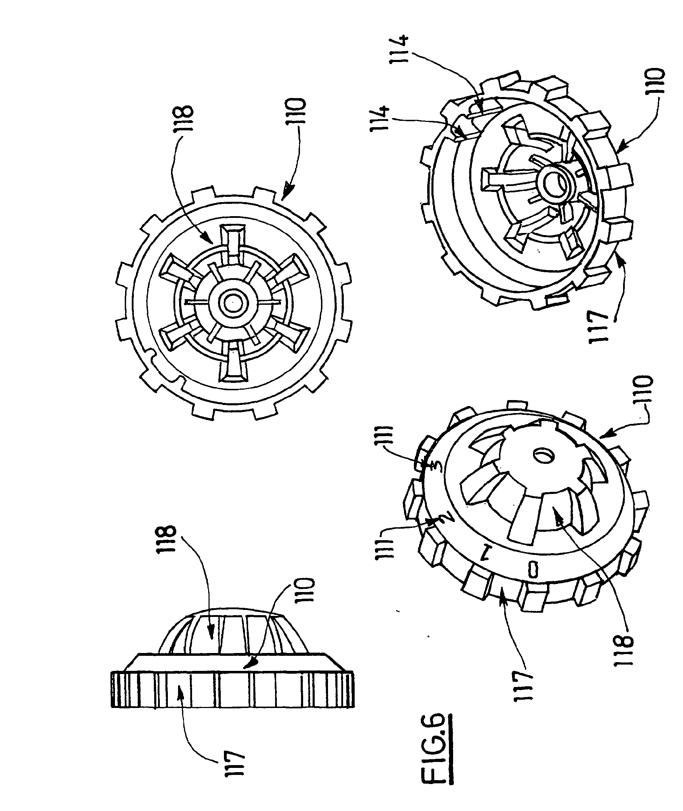

En outre, le corps comporte un détendeur réglable par la vis 112 de réglage à 2 filets autorisant le réglage entre les valeurs maximum (4 bars pour la version oxygène et 1,3 bars pour la version acétylène par exemple) et minimum de pression ici choisi à zéro, en moins d'un tour, c'est-à-dire moins de 360°, par exemple de l'ordre de 310 à 315°. Ladite vis 112 est manoeuvrée manuellement au moyen du volant 110 gradué 111 explicitement en pression (ou en débit) et rapporté au montage par encastrement sur ladite vis de réglage 112. Les limitations de course de réglage sont obtenues au moyen de butées 114 situées à la périphérie du volant 110 lui-même de telle sorte qu'un effort limité, en tout cas pas amplifié par le volant 110, leur soit transmis. La vis 112 ne comporte pas de limitations en rotation car des butées 114 pourraient être soumises à un fort couple en particulier avec ce volant 110 de grand diamètre nécessaire à un serrage sans effort et pourraient donc s'user ou se mater ce qui conduirait à des dérives du réglage. Le volant 110 de ce bloc a été conçu pour pouvoir être manoeuvré, soit en accédant sur le coté du chapeau 200 de la bouteille 300 avec les 6 crans 118 dans lesquels on peut engager le pouce, l'index et le majeur formant une forte pince triple (cf. fig. 4 à 6) ; soit en accédant par le dessus du chapeau 200, le majeur par exemple pouvant pousser sur les 12 créneaux 117 placés à la périphérie du volant 110.

Un manomètre 125 mesure la haute pression, c'est-à-dire l'autonomie restante de la bouteille 300.

L'ensemble est préférentiellement abrité par le chapeau 200 de bouteille 300 destiné à le protéger des chocs et à faciliter le transport de la bouteille 300 ainsi équipée.

Dit autrement, la solution de l'invention consiste à établir une relation entre des graduations inscrites sur le volant de réglage et la pression (ou le débit) délivrée par l'appareil, c'est à dire qu'en amenant la graduation voulue devant un repère de réglage ménagé sur le corps ou toute autre partie fixe, on obtient la pression ou le débit voulu. Pour des raisons évidentes de sécurité, le volant est imperdable et limité en course pour borner pression et/ou débit assurés par l'appareil, mais il est échangeable simplement sans démontage du détendeur et sa mise en place ne nécessite que des moyens simples disponibles dans tout service de maintenance.

L'invention est applicable à tous les détendeurs et robinets-détendeurs à réglage de pression ou de débit et ce, quel que soit leur domaine d'utilisation, par exemple dans le domaine du soudage, de l'alimentaire, du laboratoire....

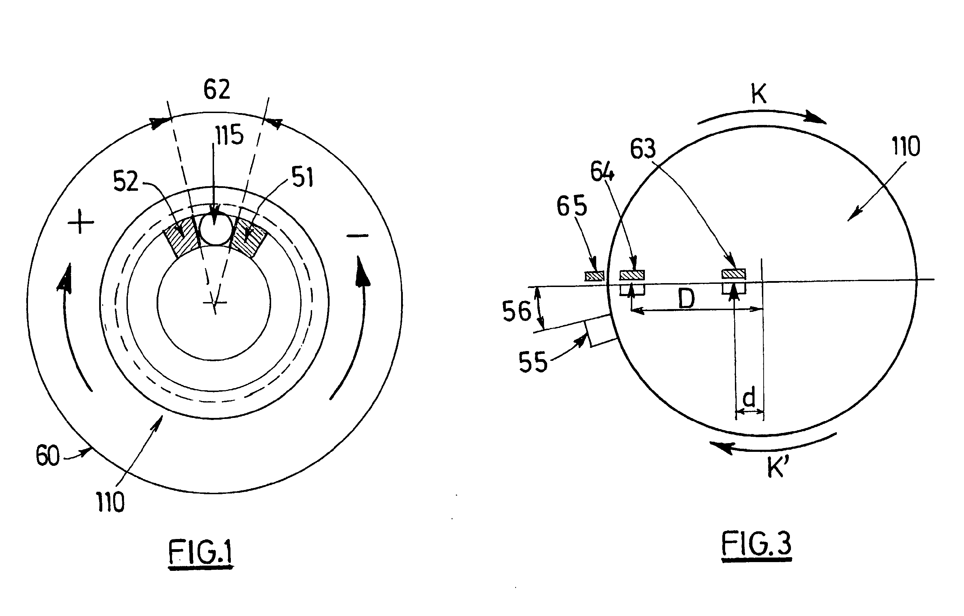

Les figures 1, 2a, 2b et 3 illustrent de façon schématique le principe de fonctionnement d'un bloc robinet-détendeur selon la présente invention

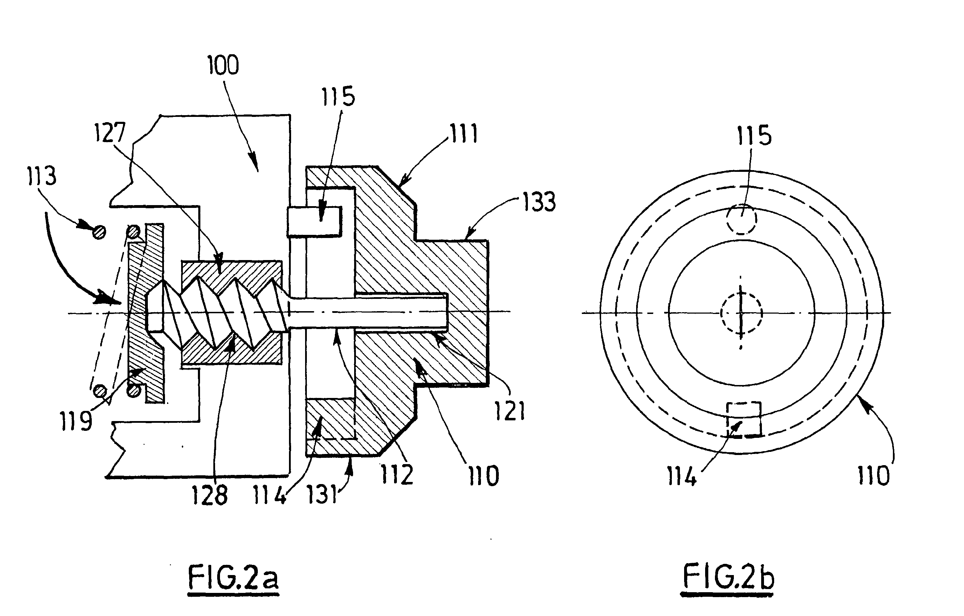

La figure 2a schématise un corps 100 de détendeur ou robinet-détendeur muni d'un volant de réglage 110 de la pression ou du débit de fluide circulant dans ce corps 100, ledit volant 110 agissant sur un plateau 119 intermédiaire entre vis de détente 112 et ressort de détente 113. La vis de détente 112 vient se fixer ou s'encastrer dans le volant 110 au niveau d'une zone d'insertion 121 par l'une de ses extrémités. Par son autre extrémité, la vis 112 de détente vient coopérer avec le plateau 119, ladite vis 112 comprenant un filet ou une rampe 128 coopérant avec un filetage ou une rampe 127 réciproque du corps 100 de façon à transformer le mouvement de rotation du volant 110 en mouvement de translation en direction ou en éloignement par rapport au plateau 119.

Une butée 115 solidaire du corps 100 est située sous le volant 110, alors qu'une autre butée 114 solidaire du volant 110 est située à la périphérie interne dudit volant 110.

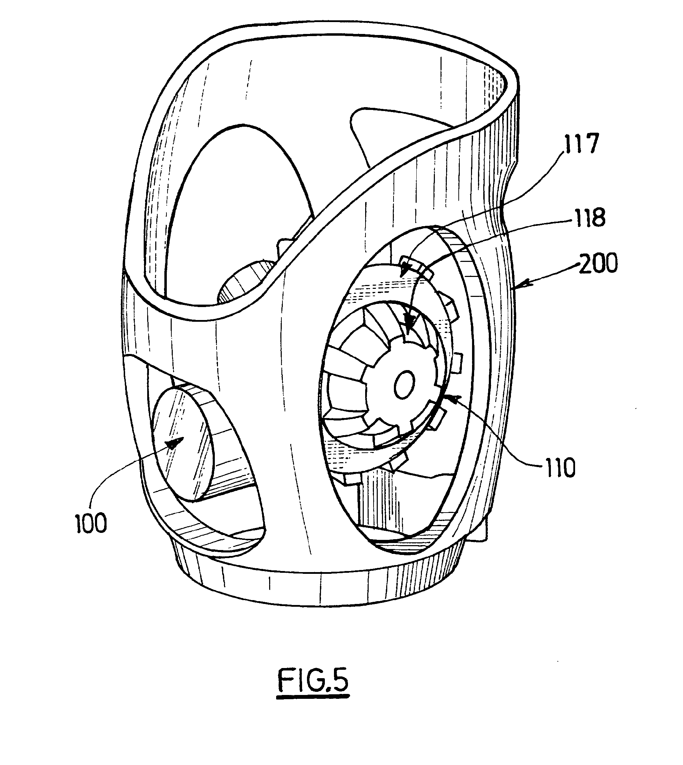

Le volant 110 comprend, par ailleurs, une partie 133 en saillie servant à la manipulation par l'opérateur par le côté et une zone 131 servant à la manipulation par le dessus, lorsque le bloc est inséré dans un capotage de protection, comme montré sur la figure 5.

Par ailleurs, sur la figure 1 est une vue schématique de face du volant 110 permettant de visualiser sa course 60 en rotation sur moins de 350°, de préférence moins de 340°. La position 51 correspond à la position occupée par la butée 114 en fin de course 60 après rotation dans le sens négatif (-), alors que la position 52 correspond à la position occupée par la butée 114 en fin de course 60 après rotation dans le sens positif (+). Comme on le comprend, la course 60 du volant 110 est limitée à moins de 350°, typiquement à environ 310 à 320°, de telle sorte qu'à chaque position angulaire correspond un réglage et un seul de la pression (ou du débit). En fait, la course 60 est limitée à 360° auxquels il faut retirer l'angle 62 entre les positions 51 et 52.

La figure 3 vise à expliciter en théorie le fonctionnement en rotation du volant 110 sur moins d'un tour (360°).

A vu de cette figure 3, on comprend que le couple KK' appliqué au volant 110 engendre un effort sur la butée d'autant plus grand que la butée est située près de l'axe de rotation du volant.

Ainsi, pour une butée 63 située à la distance "d" l'effort est "E" pour une butée 64 située à une distance "D", l'effort est "e" avec e/E = D/d. L'effort aurait pu être réduit encore un peu avec une butée 65 solidaire du corps et une butée 55 solidaire du volant situées en dehors du volant mais pour des raisons d'esthétique et surtout pour des raisons d'ergonomie, cette solution qui induit le risque de se pincer les mains dans l'espace 56 est moins satisfaisante que celles proposées sur les autres figures.

La présente invention offre donc plusieurs avantages par rapport aux dispositifs connus, notamment une facilité de manipulation puisque la course angulaire du volant est limitée à moins d'un tour, c'est-à-dire nettement moins de 360°, ce qui permet d'éliminer les risques d'erreur de parallaxe, de confusion entre les positions de réglage maximal et de réglage minimal et facilite la manipulation du volant par l'opérateur.

Il est à souligner en outre que choisir des courses angulaires de volant trop limitées, par exemple sur 180° ou moins conduit à une sensibilité et à une précision très réduite du réglage.

De plus, pour un bloc détendeur, plus le réglage est court et plus l'angle du pas de vis de détente doit être grand et, en conséquence, plus le couple de réglage est élevé et, dans des cas extrêmes, étant donné la large plage de réglage recherchée, le réglage pourrait devenir auto-réversible, c'est-à-dire que la vis de réglage pourrait retourner vers zéro toute seule ou sous l'effet de la moindre vibration ou dilatation thermique et le réglage ne serait pas stable.

Selon l'invention, le moyen à volant rotatif (110) a préférentiellement une course angulaire inférieure à 355° mais supérieure ou égale à 250°.

## Revendications

1. Bloc détendeur ou robinet-détendeur de fluide permettant de contrôler ou d'ajuster la pression ou le débit d'un fluide comprenant un corps principal (100) au sein duquel est aménagé au moins un passage (160) interne de fluide entre au moins un orifice d'entrée (130) de fluide et au moins un orifice de sortie de fluide, des moyens de contrôle de la pression et/ou du débit du fluide étant agencée dans ou sur au moins une partie dudit passage interne (160) de fluide, et au moins un moyen à volant rotatif (110) actionnable par un opérateur coopérant avec lesdits moyens de contrôle de la pression et/ou du débit du fluide, en réponse à un actionnement en rotation dudit moyen à volant rotatif (110), pour contrôler ou ajuster la pression et/ou le débit du fluide circulant dans ledit passage (160) interne de fluide et sortant par ledit orifice de sortie de fluide, ledit moyen à volant rotatif (110) étant mobile en rotation dans plusieurs positions angulaires distinctes, chaque position angulaire correspondant à une valeur donnée de pression ou de débit de fluide, **caractérisé en ce que** ledit moyen à volant rotatif (110) a une course angulaire comprise entre 250° et 350°.

2. Bloc selon la revendication 1, **caractérisé en ce que** lesdits moyens de contrôle de pression ou de débit de fluide comprennent une vis de détente (112) ou une came agissant sur au moins un clapet.

3. Bloc selon la revendication 1 ou 2, **caractérisé en ce que** la vis de détente porte au moins un filetage.

4. Bloc selon les revendications 1 à 3, **caractérisé en ce que** la vis de détente (112) comporte un filetage à filets multiples.

5. Bloc selon les revendications 1 à 4, **caractérisé en ce que** le diamètre du volant rotatif (110) est d'au moins 50 mm.

6. Bloc selon les revendications 1 à 5, **caractérisé en ce que** le moyen à volant rotatif (110) comprend une ou plusieurs butées (114) de limitation de course, de préférence les butées (114) sont aménagées du côté interne du volant rotatif (110).

7. Bloc selon les revendications 1 à 6, **caractérisé en ce que** le moyen à volant rotatif (110) est réalisé en matériau polymère moulé.

8. Bloc selon les revendications 1 à 7, **caractérisé en ce que** la course angulaire du volant (110) rotatif est inférieure ou égale à 345°, de préférence inférieure ou égale à 340°.

9. Bloc selon l'une des revendications 1 à 8, **caractérisé en ce que** la course angulaire du volant rotatif est supérieure ou égale à 280°, de préférence supérieure ou égale à 300°.

10. Bloc selon l'une des revendications 1 à 9, **caractérisé en ce que** la course angulaire du volant rotatif est comprise entre 305° et 335°, de préférence de l'ordre de 310° à 325°.

11. Bloc selon l'une des revendications 1 à 10, **caractérisé en ce que** les moyens de contrôle de pression ou de débit de fluide comprennent, en outre, au moins un clapet et/ou au moins un ressort (113).

12. Bloc selon l'une des revendications 1 à 11, **caractérisé en ce qu'**il comprend, en outre, un levier (116) mobile et actionnable par l'opérateur entre au moins une position d'ouverture du débit de fluide et au moins une position de fermeture du débit de fluide, ledit levier (116) agissant sur un clapet (117) permettant d'autoriser ou d'empêcher le passage du fluide dans au moins un passage (160) du corps (100) principal.

13. Récipient de fluide sous pression, en particulier une bouteille (300) de gaz, équipée d'un bloc détendeur ou robinet-détendeur selon l'une des revendications 1 à 12.

14. Récipient de fluide sous pression selon la revendication 13, **caractérisé en ce que** le bloc est protégé par un capotage (200) de protection monté sur le récipient (300).

## Claims

1. Fluid pressure-reducing unit or pressure-reducing valve allowing the pressure or flow rate of a fluid to be controlled or adjusted, comprising a main body (100) within which at least one internal fluid passage (160) is made between at least one fluid inlet orifice (130) and at least one fluid outlet orifice, means for controlling the fluid pressure and/or flow rate being arranged in or on at least part of said internal fluid passage (160), and at least one operator-operable rotary hand wheel means (110) cooperating with said fluid pressure and/or flow rate control means, in response to said rotary hand wheel means (110) being rotated, so as to control or adjust the pressure and/or the flow rate of the fluid flowing through said internal fluid passage (160) and leaving via said fluid outlet orifice, said rotary hand wheel means (110) being able to move in terms of rotation into a number of distinct angular positions, each angular position corresponding to a given fluid pressure or flow rate value, **characterized in that** said rotary hand wheel means (110) has an angular travel of between 250° and 350°.

2. Unit according to Claim 1, **characterized in that** said fluid pressure or flow rate control means comprise a pressure-reducing screw (112) or a cam acting on at least one valve shutter.

3. Unit according to Claim 1 or 2, **characterized in that** the pressure-reducing screw has at least one thread.

4. Unit according to Claims 1 to 3, **characterized in that** the pressure-reducing screw (112) has a multi-start thread.

5. Unit according to Claims 1 to 4, **characterized in that** the diameter of the rotary hand wheel (110) is at least 50 mm.

6. Unit according to Claims 1 to 5, **characterized in that** the rotary hand wheel means (110) comprises one or more travel-limiting stops (114), preferably the stops (114) are arranged on the inside of the rotary hand wheel (110).

7. Unit according to Claims 1 to 6, **characterized in that** the rotary hand wheel means (110) is made of a moulded polymer material.

8. Unit according to Claims 1 to 7, **characterized in that** the angular travel of the rotary hand wheel (110) is less than or equal to 345°, preferably less than or equal to 340°.

9. Unit according to one of Claims 1 to 8, **characterized in that** the angular travel of the rotary hand wheel is greater than or equal to 280°, preferably greater than or equal to 300°.

10. Unit according to one of Claims 1 to 9, **characterized in that** the angular travel of the rotary hand wheel is between 305° and 335°, preferably of the order of 310° to 325°.

11. Unit according to one of Claims 1 to 10, **characterized in that** the fluid pressure or flow rate control means further comprise at least one valve shutter and/or at least one spring (113).

12. Unit according to one of Claims 1 to 11, **characterized in that** it further comprises a moving lever (116) operable by the operator between at least one position open to the flow of fluid and at least one position closed to the flow of fluid, said lever (116) acting on a valve shutter (117) making it possible to allow or prevent the passage of fluid through at least one passage (160) of the main body (100).

13. Container for fluid under pressure, particularly a gas cylinder (300), equipped with a pressure-reducing unit or pressure-reducing valve according to one of Claims 1 to 12.

14. Container for fluid under pressure according to Claim 13, **characterized in that** the unit is protected by a protective bonnet (200) mounted on the container (300).

## Patentansprüche

1. Druckreduziereinheit oder Fluiddruckreduzierventil, die das Regeln oder Einstellen des Drucks oder des Durchflusses eines Fluids ermöglichen, einen Grundkörper (100) umfassend, in welchem mindestens ein innerer Fluiddurchgang (160) zwischen mindestens einer Fluideingangsöffnung (130) und mindestens einer Fluidausgangsöffnung ausgebildet ist, wobei Regelungsmittel des Drucks und/oder des Durchflusses des Fluids in oder an mindestens einem Teil des inneren Fluiddurchgangs (160) angeordnet sind, und mindestens ein Mittel mit drehbarem Handrad (110), das durch eine Bedienungsperson betätigt werden kann und mit den Regelungsmitteln des Drucks und/oder des Durchflusses des Fluids als Reaktion auf eine Drehbetätigung des Mittels mit drehbarem Handrad (110) zusammenwirkt, um den Druck und/oder den Durchfluss des Fluids, das in dem inneren Fluiddurchgang (160) zirkuliert und durch die Fluidausgangsöffnung austritt, zu regeln oder einzustellen, wobei das Mittel mit drehbarem Handrad (110) beim Drehen zwischen mehreren verschiedenen Winkelstellungen beweglich ist, wobei jede Winkelstellung einem gegebenen Fluiddruck- oder Fluiddurchflusswert entspricht, **dadurch gekennzeichnet, dass** das Mittel mit drehbarem Handrad (110) einen Winkelweg aufweist, der zwischen 250° und 350° liegt.

2. Einheit nach Anspruch 1, **dadurch gekennzeichnet, dass** die Regelungsmittel des Fluiddrucks oder des Fluiddurchflusses eine Druckreduzierungsschraube (112) oder einen Nocken umfassen, die auf mindestens eine Klappe einwirken.

3. Einheit nach Anspruch 1 oder 2, **dadurch gekennzeichnet, dass** die Druckreduzierungsschraube mindestens ein Gewinde hat.

4. Einheit nach den Ansprüchen 1 bis 3, **dadurch gekennzeichnet, dass** die Druckreduzierungsschraube (112) ein mehrgängiges Gewinde aufweist.

5. Einheit nach den Ansprüchen 1 bis 4, **dadurch gekennzeichnet dass** der Durchmesser des drehbaren Handrades (110) mindestens 50 mm beträgt.

6. Einheit nach den Ansprüchen 1 bis 5, **dadurch gekennzeichnet, dass** das Mittel mit drehbarem Handrad (110) einen oder mehrere Anschläge (114) zur Wegbegrenzung aufweist, wobei die Anschläge (114) vorzugsweise an der Innenseite des drehbaren Handrades (110) ausgebildet sind.

7. Einheit nach den Ansprüchen 1 bis 6, **dadurch gekennzeichnet, dass** das Mittel mit drehbarem Handrad (110) aus gegossenem Polymermaterial hergestellt ist.

8. Einheit nach den Ansprüchen 1 bis 7, **dadurch gekennzeichnet, dass** der Winkelweg des drehbaren Handrades (110) kleiner oder gleich 345°, vorzugsweise kleiner oder gleich 340° ist.

9. Einheit nach einem der Ansprüche 1 bis 8, **dadurch gekennzeichnet, dass** der Winkelweg des drehbaren Handrades größer oder gleich 280°, vorzugsweise sogar größer oder gleich 300° ist.

10. Einheit nach einem der Ansprüche 1 bis 9, **dadurch gekennzeichnet, dass** der Winkelweg des drehbaren Handrades zwischen 305° und 335°, vorzugsweise in der Größenordnung von 310° bis 325° liegt.

11. Einheit nach einem der Ansprüche 1 bis 10, **dadurch gekennzeichnet, dass** die Regelungsmittel des Fluiddrucks oder des Fluiddurchflusses außerdem mindestens eine Klappe und/oder eine Feder (113) umfassen.

12. Einheit nach einem der Ansprüche 1 bis 11, **dadurch gekennzeichnet, dass** sie außerdem einen beweglichen und durch die Bedienungsperson zwischen mindestens einer Öffnungsstellung des Fluiddurchflusses und mindestens einer Schließstellung des Fluiddurchflusses betätigbaren Hebel (116) umfasst, wobei der Hebel (116) auf eine Klappe (117) einwirkt, welche ermöglicht, den Durchgang des Fluids in mindestens einem Durchgang (160) des Grundkörpers (100) zuzulassen oder zu verhindern.

13. Behälter für Druckfluid, insbesondere eine Gasflasche (300), die mit einer Druckreduziereinheit oder einem Druckreduzierventil nach einem der Ansprüche 1 bis 12 ausgestattet ist.

14. Behälter für Druckfluid nach Anspruch 13, **dadurch gekennzeichnet, dass** die Einheit durch eine Schutzkappe (200) geschützt ist, die an dem Behälter (300) angebracht ist.
